# EUROPEAN PATENT SPECIFICATION

(11) **EP 1 276 813 B1**
(45) Date of publication and mention of the grant of the patent: **01.06.2005**
(21) Application number: 01916653.7
(22) Date of filing: 14.03.2001
(51) Int. Cl.: C08L 67/02, C08K 13/02

(54) **FLAME RETARDANT POLYESTER COMPOSITIONS**
FLAMMHEMMENDE POLYESTERZUSAMMENSETZUNGEN
COMPOSITIONS DE POLYESTER IGNIFUGES

(30) Priority: 19.04.2000 US 198601 P; 28.11.2000 US 724344
(43) Date of publication of application: 22.01.2003
(73) Proprietor: GENERAL ELECTRIC COMPANY, Schenectady, NY 12345 (US)
(72) Inventor: GOSENS, Johannes, Cornelis, NL-4708 EP Roosendaal (NL); DE WIT, Gerrit, NL-4641 RX Ossendrecht (NL)
(74) Representative: Szary, Anne Catherine, Dr.
(86) International application number: PCT/US2001/008158
(87) International publication number: WO 2001/081470

(56) References cited:
- EP-A- 0 791 634
- EP-A- 0 955 333
- WO-A-99/11702
- US-A- 5 147 912
- DATABASE WPI Section Ch, Week 199528 Derwent Publications Ltd., London, GB; Class A21, AN 1995-213131 XP002176926 & JP 07 126498 A (SUMITOMO BAKELITE CO LTD), 16 May 1995 (1995-05-16)

## Description

This application claims rights of priority from U.S. Provisional Patent Application Serial No. 60/198,601, filed April 19, 2000, which is hereby incorporated by reference.

### FIELD OF THE INVENTION

This invention relates to thermoplastic polyester compositions, and in particular to halogen-free, flame retardant thermoplastic polyester compositions.

### BACKGROUND OF THE INVENTION

Thermoplastic polyester compositions, such as poly(alkylene terephthalates) have valuable characteristics including strength, toughness, high gloss and solvent resistance. Polyesters therefore have utility as materials for a wide range of applications, from automotive parts to electric and electronic appliances. Because of their wide use, particularly in electronic applications, it is desirable to provide flame retardancy to polyesters. One particular set of conditions commonly accepted and used as a standard for flame retardancy is that which is set forth in Underwriter's Laboratories, Inc. Bulletin 94 which proscribes certain conditions by which material are rated for self-extinguishing characteristics. Another set of conditions commonly accepted and used (especially in Europe) as a standard for flame retardancy is the so-called Glow Wire Test (GWT), the International standard IEC 695-2-1/2.

Numerous flame retarding agents for polyesters are known, but many contain halogens, usually bromine. Halogenated flame retarding agents are less desirable because certain halogen-containing impurities and by-products result in corrosion of the equipment used in the manufacture of polyesters and the articles made therefrom. Use of halogenated retardants in typical amounts (i.e., from 5-20 percent by weight of the polyester) can have a degrading effect upon the compositions, often resulting in the deterioration of valuable physical properties of the base polymer. Halogenated organic compounds can generate halogen containing gases, suspected to be toxic, when subjected to burning or smoldering.

Alternative flame retarding agents have therefore been developed, based on, phosphorus compounds, and nitrogen compounds alone or preferably in further combination with synergists. Preferred nitrogen-containing compounds include melamine cyanurate, tris(hydroxyethyl)isocyanurate, or guanidine phosphate or borate. JP 03-281652 to Mitsubishi Petrochemical, for example, discloses flame retardant polyester compositions comprising 100 parts of a polyester resin, 30-250 parts of a filler, 5-50 parts of a melamine cyanurate, and 5-50 parts of a P-containing FR compound. DE 19614424 to Hoechst discloses compositions comprising polymers such as certain polyesters, 30 percent by weight of glass fibers, tris(hydroxyethyl)isocyanurate, and a phosphinic or diphosphinic salt. JP 09-268251 to Nippon GE Plastics discloses 60-97 parts of a polyester, 0.5-100 parts of melamine or guanidine phosphate or borate, and 3-40 parts of a phosphorous acid ester. While suitable for their intended purposes, there nonetheless remains a need in the art for polyester compositions with enhanced flame retardancy at the lowest level of FR-ingredients as possible, and to obtain good physical and mechanical properties.

### BRIEF SUMMARY OF THE INVENTION

The above-described deficiencies of the prior art are fulfilled by a flame retardant polyester composition comprising, based on the total composition,
(a) from 55 to 97 weight percent of a polyester resin or polyester resin blend component;
(b) from to 20 weight percent of a flame retarding quantity of at least one nitrogen-containing compound , selected from the group of triazine, guanidine , or (iso)cyanurate compounds.
(c) from 1 to 20 weight percent of a zinc and/or boron compound, selected from the group of zinc sulphide, zinc borate or boron nitride, and/or combinations thereof .
(d) non-fibrillating PTFE in amount of o to 2 weight percent.
(e) from 1 to 20 weight percent of a phosphorous-containing compound, wherein the total amount of nitrogen containing compound, zinc and/or boron compound, non-fibrillating PTFE, and phosphorous-containing compound comprises from about 3 to about 45 weight percent of the total composition.

### DETAILED DESCRIPTION OF THE INVENTION

A halogen-free, flame retardant polyester composition comprises, based on the total composition,
(a) from 55 to 97 weight percent of a polyester resin or polyester resin blend component;
(b) from 1 to 20 weight percent of a flame retarding quantity of at least one nitrogen-containing compound, selected from the group of triazine, guanidine , or (iso)cyanurate compounds.
(c) from 1 to 20 weight percent of a zinc and/or boron compound, selected from the group of zinc sulphide, zinc borate or boron nitride, and/or combinations thereof.
(d) non-fibrillating PTFE in amount of 0 to 2 weight percent.
(e) from 1 to 20 weight percent of a phosphorous-containing compound, wherein the total amount of nitrogen containing compound, zinc and/or boron compound, non-fibrillating PTFE, and phosphorous-containing compound comprises from 3 to 45 weight percent of the total composition.

The composition may further optionally comprise various fillers and other additives known in the art, particular glass fibers in an amount of up to 45 weight percent, and 0.01 to 2.0 weight percent of at least one anti-dripping agent which retards the tendency of the composition to drip when subjected to burning conditions.

Suitable polyesters include those derived from an aliphatic or cycloaliphatic diol, or mixtures thereof, containing from 2 to about 10 carbon atoms and at least one aromatic dicarboxylic acid. Preferred polyesters are derived from an aliphatic diol and an aromatic dicarboxylic acid having repeating units of the following general formula: 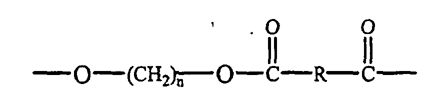 wherein n is an integer of from 2 to 6, and R is a C6-C20 aryl radical comprising a decarboxylated residue derived from an aromatic dicarboxylic acid.

Examples of aromatic dicarboxylic acids represented by the decarboxylated residue R are isophthalic or terephthalic acid, 1,2-di(p-carboxyphenyl)ethane, 4,4'-dicarboxydiphenyl ether, 4,4' bisbenzoic acid, and mixtures thereof. All of these acids contain at least one aromatic nucleus. Acids containing fused rings can also be present, such as in 1,4- 1,5- or 2,6-naphthalene dicarboxylic acids. The preferred dicarboxylic acids are terephthalic acid, isophthalic acid, naphthalene dicarboxylic acid or a mixtures thereof.

The aliphatic polyols include glycols, such as ethylene glycol, propylene glycol, butanediol, hydroquinone, resorcinol, trimethylene glycol, 2-methyl-1,3-propane glycol, hexamethylene glycol, decamethylene glycol, cyclohexane dimethanol, or neopentylene glycol.

Also contemplated herein are the above polyesters with minor amounts, e.g., from 0.5 to 30 percent by weight, of units derived from aliphatic acids and/or aliphatic polyols to form copolyesters. The aliphatic polyols include glycols, such as poly(ethylene glycol). Such polyesters can be made following the teachings of, for example, U.S. Pat. Nos. 2,465,319 and 3,047,539.

The most preferred polyesters are poly(ethylene terephthalate) ("PET"), poly(1,4-butylene terephthalate), ("PBT"), and poly(propylene terephthalate) ("PPT"). A preferred PBT resin is one obtained by polymerizing a glycol component at least 70 mole %, preferably at least 80 mole %, of which consists of tetramethylene glycol and an acid component at least 70 mole %, preferably at least 80 mole %, of which consists of terephthalic acid, and polyester-forming derivatives therefore. The preferred glycol component can contain not more than 30 mole %, preferably not more than 20 mole %, of another glycol, such as ethylene glycol, trimethylene glycol, 2-methyl-1,3-propane glycol, hexamethylene glycol, decamethylene glycol, cyclohexane dimethanol, or neopentylene glycol. The preferred acid component can contain not more than 30 mole %, preferably not more than 20 mole %, of another acid such as isophthalic acid, 2,6-naphthalene dicarboxylic acid, 2,7-naphthalene dicarboxylic acid, 1,5-naphthalene dicarboxylic acid, 4,4'-diphenyl dicarboxylic acid, 4,4'-diphenoxyethane dicarboxylic acid, p-hydroxy benzoic acid, sebacic acid, adipic acid and polyester-forming derivatives thereof.

Block copolyester resin components are also useful, and can be prepared by the transesterification of (a) straight or branched chain poly(1,4-butylene terephthalate) and (b) a copolyester of a linear aliphatic dicarboxylic acid and, optionally, an aromatic dibasic acid such as terephthalic or isophthalic acid with one or more straight or branched chain dihydric aliphatic glycols. For example a poly(1,4-butylene terephthalate) can be mixed with a polyester of adipic acid with ethylene glycol, and the mixture heated at 235°C to melt the ingredients, then heated further under a vacuum until the formation of the block copolyester is complete. As the second component, there can be substituted poly(neopentyl adipate), poly(1,6-hexylene azelate-coisophthalate), poly(1,6-hexylene adipate-co-isophthalate) and the like. An exemplary block copolyester of this type is available commercially from General Electric Company, Pittsfield, Mass., under the trade designation VALOX 330.

Especially useful when high melt strength is important are branched high melt viscosity poly(1,4-butylene terephthalate) resins, which include a small amount of e.g., up to 5 mole percent based on the terephthalate units, of a branching component containing at least three ester forming groups. The branching component can be one which provides branching in the acid unit portion of the polyester, or in the glycol unit portion, or it can be hybrid. Illustrative of such branching components are tri- or tetracarboxylic acids, such as trimesic acid, pyromellitic acid, and lower alkyl esters thereof, and the like, or preferably, polyols, and especially preferably, tetrols, such as pentaerythritol, triols, such as trimethylolpropane; or dihydroxy carboxylic acids and hydroxydicarboxylic acids and derivatives, such as dimethyl hydroxyterephthalate, and the like. The branched poly(1,4-butylene terephthalate) resins and their preparation are described in Borman, U.S. Pat. No. 3,953,404, incorporated herein by reference. In addition to terephthalic acid units, small amounts, e.g., from 0.5 to 15 percent by weight of other aromatic dicarboxylic acids, such as isophthalic acid or naphthalene dicarboxylic acid, or aliphatic dicarboxylic acids, such as adipic acid, can also be present, as well as a minor amount of diol component other than that derived from 1,4-butanediol, such as ethylene glycol or cyclohexylenedimethanol, etc., as well as minor amounts of trifunctional, or higher, branching components, e.g., pentaerythritol, trimethyl trimesate, and the like. In addition, the poly(1,4-butylene terephthalate) resin component can also include other high molecular weight resins, in minor amount, such as poly(ethylene terephthalate), block copolyesters of poly(1,4-butylene terephthalate) and aliphatic/aromatic polyesters, and the like. The molecular weight of the poly(1,4-butylene terephthalate) should be sufficiently high to provide an intrinsic viscosity of about 0.4 to 2.0 deciliters per gram, preferably 0.6 to 1.6 dl.g/., measured, for example, as a solution in a 60:40 mixture of phenol and tetrachloroethane at 30°C.

Blends of polyesters with amorphous resin additives and/or impact modifiers may also be used.

Preferred amorphous resins as additives for the base resin include styrene and acrylic resins and polycarbonates, and mixtures or copolymers thereof. The styrene and acrylic polymers are substantially free of rubber and are preferably resinous, thermoplastic polymers of styrene, alphamethylstyrene, methyl acrylate, methylmethacrylate, acrylonitrile, methacrylonitrile, maleic acid anhydride, N-substituted maleimide, vinyl acetate or mixtures thereof. Styrene/acrylonitrile copolymers, alpha-methylstyrene/acrylonitrile copolymers and methylmethacrylate copolymers are preferred. These polymers are typically prepared by radical polymerization, in particular by emulsion, suspension, solution or bulk polymerization. They preferably have number average molecular weights of from 20,000 to 200,000.

The most preferred amorphous resin is polycarbonate, generally aromatic polycarbonate resins such as are prepared by reacting a dihydric phenol with a carbonate precursor, for example phosgene, a haloformate or a carbonate ester. Generally speaking, such carbonate polymers may be typified as possessing recurring structural units of the formula 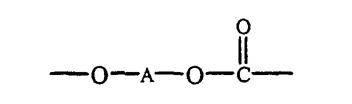 wherein A is a divalent aromatic radical, preferably a dihydric phenol or biphenol employed in the polymer producing reaction. Suitable dihydric phenols are mononuclear or polynuclear aromatic compounds, containing as functional groups two hydroxy radicals, each of which is attached directly to a carbon atom of an aromatic nucleus. Typical dihydric phenols include but are not limited to 2,2-bis(4-hydroxyphenyl) propane; hydroquinone; resorcinol; biphenol; 2,2-bis(4-hydroxyphenyl) pentane; 2,4'-(dihydroxydiphenyl) methane; bis(2-hydroxyphenyl) methane; bis(4-hydroxyphenyl) methane; 1,1-bis(4-hydroxyphenyl)-3,3,5-trimethylcyclohexane; fluorenone bisphenol, 1,1-bis(4-hydroxyphenyl) ethane; 3,3-bis(4-hydroxyphenyl) pentane; 2,2'-dihydroxydiphenyl; 2,6-dihydroxynaphthalene; bis(4-hydroxydiphenyl)sulfone; bis(3,5-diethyl-4-hydroxyphenyl)sulfone; 2,2-bis(3,5-dibromo-4-hydroxyphenyl)propane; 2,2-bis(3,5-dimethyl-4-hydroxyphenyl)propane; 2,4'-dihydroxydiphenyl sulfone; 5'-chloro-2,4'-dihydroxydiphenyl sulfone; 4,4'-dihydroxydiphenyl ether; 4,4'-dihydroxy-3,3'-dichlorodiphenyl ether, and the like. Other suitable dihydric phenols are disclosed in U.S. Pat. Nos. 2,999,835; 3,038,365 and 4,131,575.

It is also possible to employ two or more different dihydric phenols or a copolymer of a dihydric phenol with a glycol or with a hydroxy- or acid-terminated polyester or with a dibasic acid or hydroxy acid in the event a carbonate copolymer rather than a homopolymer is desired for use. Polyarylates and polyester-carbonate resins or their blends can also be employed. Branched polycarbonates are also useful, as well as blends of linear polycarbonate and a branched polycarbonate. The branched polycarbonates may be prepared by adding a branching agent during polymerization.

These branching agents are well known and may comprise polyfunctional organic compounds containing at least three functional groups which may be hydroxyl, carboxyl, carboxylic anhydride, haloformyl and mixtures thereof. Specific examples include trimellitic acid, trimellitic anhydride, trimellitic trichloride, tris-p-hydroxy phenyl ethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha,alpha-dimethyl benzyl)phenol), 4-chloroformyl phthalic anhydride, trimesic acid and benzophenone tetracarboxylic acid. The branching agents may be added at a level of about 0.05-2.0 weight percent. Branching agents and procedures for making branched polycarbonates are described in U.S. Patent. Nos. 3,635,895 and 4,001,184 which are incorporated by reference. All types of polycarbonate end groups are contemplated as being within the scope of the present invention.

The polycarbonates are preferably high molecular weight aromatic carbonate polymers having an intrinsic viscosity, as determined in chloroform at 25°C of about 0.3 to about 1.5 dl/gm, preferably about 0.45 to about 1.0 dl/gm. Such polycarbonates may be branched or unbranched and generally will have a weight average molecular weight of about 10,000 to about 200,000, preferably about 20,000 to about 100,000 as measured by gel permeation chromatography.

Preferred aromatic carbonates are homopolymers, for example, a homopolymer derived from 2,2-bis(4-hydroxyphenyl)propane (bisphenol-A) and phosgene, commercially available under the trade designation LEXAN™ from General Electric Company. When polycarbonate is used, the polyester resin blend component of the composition comprises about 5 to about 50 percent by weight of polycarbonate, and 95 to 50 percent by weight of polyester resin, based on the total weight of the polyester blend component.

The polyester resin blend component may further optionally comprise impact modifiers such as a rubbery impact modifier. Typical impact modifiers are derived from one or more monomers selected from the group consisting of olefins, vinyl aromatic monomers, acrylic and alkylacrylic acids and their ester derivatives, as well as conjugated dienes. Especially preferred impact modifiers are the rubbery, high-molecular weight materials including natural and synthetic polymeric materials showing elasticity at room temperature. They include both homopolymers and copolymers, including random, block, radial block, graft and core-shell copolymers, as well as combinations thereof. Suitable modifiers include core-shell polymers built up from a rubber-like core on which one or more shells have been grafted. The core typically consists substantially of an acrylate rubber or a butadiene rubber. One or more shells typically are grafted on the core. The shell preferably comprises a vinyl aromatic compound and/or a vinyl cyanide and/or an alkyl(meth)acrylate. The core and/or the shell(s) often comprise multifunctional compounds which may act as a cross-linking agent and/or as a grafting agent. These polymers are usually prepared in several stages.

Olefin-containing copolymers such as olefin acrylates and olefin diene terpolymers can also be used as impact modifiers. An example of an olefin acrylate copolymer impact modifier is ethylene ethylacrylate. Other higher olefin monomers can be employed as copolymers with alkyl acrylates, for example, propylene and n-butyl acrylate. The olefin diene terpolymers are well known in the art and generally fall into the EPDM (ethylene propylene diene) family of terpolymers. Polyolefins such as polyethylene, polyethylene copolymers with alpha-olefins are also of use in these compositions.

Styrene-containing polymers can also be used as impact modifiers. Examples of such polymers are acrylonitrile-butadiene-styrene (ABS), acrylonitrile-butadiene-alpha-methylstyrene, styrene-butadiene, styrene butadiene styrene (SBS), styrene ethylene butylene styrene (SEBS), methacrylate-butadiene-styrene (MBS), and other high impact styrene-containing polymers.

The flame retardant polyester composition further includes a flame retarding quantity of one or a mixture of nitrogen-containing compounds, selected from the group of triazine, guanidine, or (iso)cyanurate compounds. Examples of such compounds are the 1,3,5-triazine compounds as for instance 2,4,6-triamine-1,3,5-triazine (melamine), melam, melem, melon, ammeline, ammelide, 2-ureidomelamine, acetoguanamine, benzoguanamine, diaminephenyltriazine or mixtures thereof. Especially salts/adducts of these compounds with (iso)cyanuric acid (as eg melamine cyanurate), boric acid, and/or phosphoric acid (including the so called melamine polyphosphate) can be used in the composition. Preferred compounds include the cyanuric acid derivatives of 1,3,5-triazine-compounds as melamine cyanurate.

The nitrogen-containing compounds are preferably used in combination with one or more phosphorous-containing compounds as described below, since the combination appears to impart better flame retardant properties than where either component is used alone. Generally, the nitrogen-containing compounds are included in the composition at a level of about 1 to 20 parts by weight per 100 parts by weight of the total polymer composition.

The polymer compositions also preferably contain one or a mixture of phosphorous- containing compounds which tend to reduce the burning behavior (burning time) properties of the polymer and also may decrease the amount of combustible volatiles generated when the polymer is subjected to burning conditions. Suitable phosphorous-containing materials include inorganic phosphorous compounds such as Boron phosphate, Zinc phosphate. Organic phosphates which may be used include mono or di-melamine phosphate; alkyl, aryl and mixed aralkyl phosphates and phosphonates such as triethyl phosphate, dimethyl methylphosphonate, triphenyl phosphate, tricresyl phosphate and alkyl diphenyl phosphates; diphosphates such as bisphenol A diphosphate, resorcinoldiphosphate and the reaction product of bis(2-chloroethyl) phosphorochloridate and ethylene glycol; halogenated alkyl phosphates and phosphonates such as 2-chloroethanol phosphate, 1,3-dichloro-2-propanol phosphate and bis(2-chloroethyl)2-chloroethylphosphonate; phosphoramides such as tetraxylyl piperazine diphosphoramide; phosphine oxides of the structure R₁ R₂ R₃ - P =0 wherein R₁, R₂ and R₃ are alkyl, hydroxy alkyl, cyanoalkyl, phenyl or benzyl such as triphenylphosphine oxide and tris-cyanoethyl phosphine oxide; phosphorous containing diols and polyols such as the reaction product of propylene oxide and dibutyl acid pyrophosphate; phosphinates such as 1,4-diisobutyl - 2,3,5, 6 - tetrahydroxy - 1,4-dioxa -1,4- diphosphorinane; oligomeric phosphites; oligomeric phosphorous esters; and oligomeric cyclic phosphonates such as the type disclosed in U.S. Patent 5,030,674, the complete disclosure of which is incorporated hereby by reference.

The other useful phosphorous containing compositions include phosphoramides of the formula: 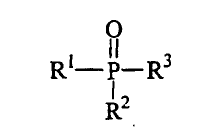 wherein R₁ is an amine residue, and R₂ and R₃ are independently an alkoxy residue, aryloxy residue, aryloxy residue containing at least one alkyl or one halogen substitution or mixture thereof, or amine residue. It is preferred that the phosphoramide have a glass transition point of at least about 0°C, preferably of at least about 10°C, and most preferably of at least about 20°C. When a phosphoramide having a glass transition point of at least about 0°C is used as a source of phosphorous in resin compositions, it was unexpectedly found that a higher heat deflection temperature of test specimens made from the resin composition could be obtained as compared to compositions containing an organophosphate ester known in the art.

Another phosphoramide comprises a phosphoramide having a glass transition temperature of at least about 0°C, preferably of at least about 10°C, and most preferably of at least about 20°C, of the formula: 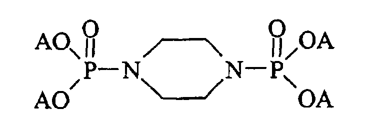 wherein each A is independently phenyl, 2,6-dimethylphenyl, or 2,4,6-trimethylphenyl.

Other phosphorous containing compounds which may be used include bicyclic (pentaerythritol phosphate alcohol) carbonates and alkyl diaryl phosphates of the type disclosed in U.S. Patent 5,633,301. Preferred phosphorous - containing compounds are phosphine oxides, phosphonate esters, phosphinate esters, phosphoramides and (di)phosphates.

Generally, the phosphorous-containing compounds are included in the composition at a level of about 1 to 20 parts by weight per 100 parts by weight of the total polymer composition.

In an important feature, the compositions further comprise zinc sulphide, zinc borate and/or boron nitride in an amount effective to enhance flame retardancy, generally about 1 to about 20, preferably from about 2 to about 10, and most preferably from about 3 to about 8 percent by weight, based on the total composition. The presence of zinc sulphide, zinc borate and/or boron nitride in combination with the nitrogen-containing and phosphorous-containing compounds provides an unexpectedly synergistic effect in enhancing the flame retardancy, as measured by the so called Glow Wire Test (GWT), of polyester compositions. Other investigated zinc or boron compounds do not show this synergistic effect. The presence of small amounts of so called non-fibrillating PTFE (teflon) surprisingly appeared to have a positive effect in enhancing the flame retardancy as measured via the GWT as well, while fibrillating PTFE (known as an anti-dripping agent) does not show this effect. Fibrillating means that the PTFE forms fibrils during melt blending, while non-fibrillating PTFE does not show (or to a much lesser content) this behavior. The claimed amount of non-fibrillating PTFE of this invention is up to about 2 weight percent. An example of the so-called non-fibrillating PTFE is the lubricant-type of PTFE with typical particle size of 5-20 micron, eg Fluoroglide FL1690 from ICI. A typical example of a so-called fibrillating PTFE is eg an encapsulated PTFE: an appr. 50/50 blend of PTFE (emulsion type) with emulsion SAN, eg TSAN as supplied by GE Plastics.

Fillers and other additives known in the art may be employed to achieve the desired processing and physical characteristics of the flame retardant polyester composition. In the thermoplastic compositions which contain a crystalline polyester resin and/or polycarbonate resin, for example, it is preferable to use a stabilizer material. Typically, such stabilizers are used at a level of about 0.01-10 weight percent and preferably at a level of about 0.05-2 weight percent. The preferred stabilizers include an effective amount of an acidic phosphate salt; an acid, alkyl, aryl or mixed phosphite having at least one hydrogen or alkyl group; a Group IB or Group IIB metal phosphate salt; a phosphorous oxo acid, a metal acid pyrophosphate or a mixture thereof. The suitability of a particular compound for use as a stabilizer and the determination of how much is to be used as a stabilizer may be readily determined by preparing a mixture of the crystalline resin component, the polycarbonate with and without the particular compound and determining the effect on melt viscosity, gas generation or color stability or the formation of interpolymer. The acidic phosphate salts include sodium dihydrogen phosphate, mono zinc phosphate, potassium hydrogen phosphate, calcium dihydrogen phosphate and the like. The phosphites may be of the formula: 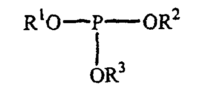 wherein R₁, R₂, and R₃ are independently selected from the group consisting of hydrogen, alkyl and aryl with the proviso that at least one of R₁, R₂, and R₃ is hydrogen or alkyl.

The phosphate salts of a Group IB or Group IIB metal include zinc phosphate, copper phosphate and the like. The phosphorous oxo acids include phosphorous acid, phosphoric acid, polyphosphoric acid or hypophosphorous acid.

The polyacid pyrophosphates maybe of the formula:

Mz xHyPnO₃n+1

wherein M is a metal, x is a number ranging from 1 to 12 and y is a number ranging 1 to 12, n is a number from 2 to 10, z is a number from 1 to 5 and the sum of (xz) +y is equal to n+2.

Inorganic fillers can impart additional beneficial properties such as thermal stability, increased density, stiffness and texture. Typical inorganic fillers include but are not limited to alumina, amorphous silica, anhydrous aluminum silicates, mica, feldspar, clays, talc, glass flake, glass fibers, glass microspheres, wollastonite, metal oxides such as titanium dioxide, zinc oxide, ground quartz, and the like. Preferred inorganic fillers include zinc oxide, barium sulfate and fiberglass as well as mixtures of the above. Barium sulfate may be in the form of the naturally occurring barites or as synthetically derived barium sulfate. The particle size may vary, and is preferably from about 0.1 to about 50 microns, most preferably from about 1 to about 15 microns.

Where used, fibrous (filamentous) glass can be untreated, but preferably, it will be treated with silane or titanate coupling agents, e.g. Useful filamentous glass is well known to those skilled in the art and is widely available from a number of manufacturers. For compositions ultimately employed for electrical uses, it is preferred to use fibrous glass filaments comprised of lime-aluminum borosilicate glass that is relatively soda free, commonly known as "E" glass. However, other glasses are useful where electrical properties are not so important, e.g., the low soda glass commonly known as "C" glass. The filaments are made by standard processes, e.g., by steam or air blowing, flame blowing and mechanical pulling. The preferred filaments for plastic reinforcement are made by mechanical pulling. Exemplary filament diameters are in the range from about 0.00012 to 0.00075 inch. The glass filaments may be bundled into fibers and the fibers bundled in turn to yarns, ropes or rovings, or woven into mats, and the like, as is required by the particular end use of the composition. In preparing the molding compositions, it is convenient to use the filamentous glass in the form of chopped strands of from about one-eighth to about 2 inches long., which usually results in filament lengths between about 0.0005 to 0.250 inch in the molded compounds.

When particulate fillers are present, for example in molding compositions, the compositions include from o to about 60 weight percent, preferably from about 10 to about 50 weight percent, and most preferably from about 25 to about 40 weight of the total composition. Glass fibers are typically used in quantities from about o to about 60 weight percent, preferably from about 10 to about 40 weight percent.

The compositions may also contain one or a mixture of reinforcing filler. Suitable fillers include silica; silicates such as talc or mica; carbon black; and reinforcing fibers, such as carbon fiber, aramide fiber or glass fiber. Glass fibers may be composed of E-glass or alkali metal silicate glass and may comprise short, chopped glass fibers with a circular cross section ranging in diameter from about 2x10-4 to 8x10-4 inch and about 0.2 to 2 cm in length. Such glass fibers are normally supplied by the manufacturers with a surface treatment compatible with the polymer component of the composition, such as a siloxane or polyurethane sizing. When used in the composition, the reinforcing filler is normally included at a level of from about 1 to 40 parts by weight, more preferably from about 5 to 35 parts by weight, per 100 parts by weight of the total polymer composition.

The composition may also include one or more anti-dripping agents which have the properties of preventing or retarding resin from dripping while the resin is subjected to burning conditions. Specific examples of such agents include silicone oils, silica (which also serves as a reinforcing filler), asbestos and fibrillating-type of fluorine-containing polymers. Examples of fluorine-containing polymers include fluorinated polyolefins such as polytetrafluoroethylene, tetrafluoroethylene/hexafluoropropylene copolymers, tetrafluoroethylene/ethylene copolymers, polyvinylidene fluoride and polychlorotrifluoroethylene. Preferred such fluorine-containing polymers have a melt viscosity at 3500C of about 1.0 x 104 to 1.0 x 1014 poises. When used, the anti-dripping agent is added to the composition at a level of about 0.05 to 5 parts by weight, more preferably from about 0.1 to 4 parts by weight, based on the weight of the total polymer composition.

The compositions may also contain other conventional additives used in polyester polymer compositions such as stabilizers, mold release agents, plasticizers and processing aids.

Other ingredients, such as dyes, pigments, anti-oxidants, and the like can be added for their conventionally employed purposes.

The compositions can be prepared by a number of procedures. In an exemplary process, the polyester composition, optional amorphous additives, impact modifier and filler and/or reinforcing glass is put into an extrusion compounder with resinous components to produce molding pellets. The resins and other ingredients are dispersed in a matrix of the resin in the process. In another procedure, the ingredients and any reinforcing glass are mixed with the resins by dry blending, then either fluxed on a mill and comminuted, or then are extruded and chopped. The composition and any optional ingredients can also be mixed and directly molded, e.g., by injection or transfer molding techniques. Preferably, all of the ingredients are freed from as much as water as possible. In addition, compounding should be carried out to ensure that the residence time in the machine is short; the temperature is carefully controlled; the friction heat is utilized; and an intimate blend between the resin composition and any other ingredients is obtained.

Preferably, the ingredients are pre-compounded, pelletized and then molded. Pre-compounding can be carried out in conventional equipment. For example, after pre-drying the polyester composition (if necessary) e.g., for four hours at 120 °C, a single screw extruder is fed with a dry blend of the ingredients, the screw employed having a long transition section to ensure proper melting. On the other hand, a twin screw extrusion machine, e.g., an extruder with i.e. intermeshing co-rotating screws can be fed with resin and additives at the feed port and reinforcing additives (and other additives) fed downstream. In either case, a generally suitable melt temperature will be about 230 to 300 °C.

The pre-compounded composition can be extruded and cut up into molding compounds such as conventional granules, pellets, etc., by standard techniques.

The composition can then be molded in any equipment conventionally used for thermoplastic compositions, e.g., a Newbury type injection molding machine with conventional cylinder temperatures, e.g., 230 to 280 ° C, and conventional mold temperatures, e.g. 55 to 95 °C.

The following examples illustrate the invention. They are set forth as a further description but are not to be construed as limiting the invention thereto. All amounts are by weight percent.

### EXAMPLES

A dry blend of the components shown below in the Table (except for the resorcinol diphosphate and glass fiber) is made and extruded in a WP 25-mm co-rotating extruder at 300 RPM, the resorcinol diphosphate and glass fiber being fed separately downstream from the extruder, and the temperature setting being 50-140-265-260-260-260-260-260-275°C, vacuum of 0.2 bar. The extrudate was pelletized, the pellets were dried at 110°C for 4 hours, and then injection molded on an Engel (35 tons) with a temperature setting of 245-255-265-265 from throat to nozzle, and a mold temperature of 70°C.

The flammability of test specimens is evaluated according to the standard Glow Wire Test (GWT) protocol as described in the International standard IEC 695-2-1/2. Ratings of 960 GWT indicate test samples with the best resistance to burning, whereas 850 GWT rating is a lower degree of resistance to burning if it failed at 960 degrees C.

Materials identified in the Tables by abbreviations or trade names are as follows :
- PBT: Poly(butyleneterephthalate) with IV = 0.8-1.2
- PET: Poly(ethyleneterephthalate) with IV = 0.8
- RDP: Resorcinol Diphosphate
- ZnS: Zinc Sulfide
- MC: Melamine Cyanurate (MC25 from DSM)
- ZnO: Zinc Oxide
- ZnBor.: Zinc Borate (Firebrake ZB from Eigenmann & V.)
- BN: Boron nitride
- NF-PTFE: Non-fibrillating poly(tetrafluoroethylene) ( Fluoroglide FL1690 from ICI)
- F-PTFE: Fibrillating Poly(tetrafluoroethylene) : TSAN (PTFE/SAN = 50/50; prepared from emulsions)

Formulations and test results are shown in Tables 1-3 as examples 1-14. Examples identied with the Letter C are control examples outside the scope of the invention. Amounts are part by weight.

**Table 1 :**

| **Component** | **1c** | **2c** | **3c** | **4c** | **5** | **6** | **7** | **8** |
|---|---|---|---|---|---|---|---|---|
| PBT | 37.2 | 34.2 | 37.2 | 37.2 | 34.5 | 34.5 | 34.5 | 51.8 |
| PET | 18.6 | 17.6 | 18.6 | 18.6 | 17.3 | 17.3 | 17.3 - | |
| Glass Fiber | 30 | 30 | 30 | 30 | 30 | 30 | 30 | 30 |
| Antioxidant | 0.2 | 0.2 | 0.2 | 0.2 | 0.2 | 0.2 | 0.2 | 0.2 |
| RDP | 6 | 6 | 6 | 6 | 6 | 6 | 6 | 6 |
| MC | 8 | 12 | 8 | - | 4 | 8 | 6 | 4 |
| ZnS | - | - | - | 8 | 8 | 4 | 6 | 6 |
| | | | | | | | | |
| 960 GWT @ 2mm | Fail | Fail | Fail | Fail | Pass | Pass | Pass | Pass |

As may be seen by reference to the above data, compositions without zinc sulfide (**1c** through **3c**) fail the flame retardancy test (GWT-method). Formulations with zinc sulfide (**5** through **8** )showed excellent GWT results, although not all melamine cyanurate can be omitted (**4c**). So, Polyester formulations with both P- and N-based FR-systems show improved flame retardancy in the presence of Zinc sulfide.

**Table 2**

| **Component** | **9** | **10c** | **11** |
|---|---|---|---|
| PBT | 47.8 | 47.3 | 47.3 |
| Glass Fiber | 30 | 30 | 30 |
| Antioxidant | 0.2 | 0.2 | 0.2 |
| RDP | 9 | 9 | 9 |
| MC | 7 | 7 | 7 |
| ZnS | 6 | 6 | 6 |
| NF-PTFE | - | - | 0.5 |
| F-PTFE | - | 0.5 | |
| | | | |
| 960 GWT @ 1mm | Pass/Fail | Fail | Pass |

The formulations **9** through **11** (Table 2) are tested at the more critical thickness of **1** mm in stead of **2** mm for the GWT. It can clearly be seen that the addition of a small amount of fibrillating PTFE has a negative effect on the GWT performance at 1 mm, while the addition of non-fibrillating PTFE showed a solid pass rate for the 960 GWT at 1 mm. The formulation without PTFE has a borderline GWT performance at 1 mm.

**Table 3**

| **Component** | **11** | **12** | **13c** | **14** |
|---|---|---|---|---|
| PBT | 47.3 | 47.3 | 47.3 | 47.3 |
| Glass Fiber | 30 | 30 | 30 | 30 |
| Antioxidant | 0.2 | 0.2 | 0.2 | 0.2 |
| RDP | 9 | 9 | 9 | 9 |
| MC | 7 | 7 | 7 | 7 |
| ZnS | 6 | | | |
| ZnBor. | | 6 | | |
| ZnO | | | 6 | |
| BN | | | | 6 |
| NF-PTFE | 0.5 | 0.5 | 0.5 | 0.5 |
| | | | | |
| 960 GWT @ 1mm | Pass | Pass | Fail | Pass |

The results of Table 3 showed that ZnS can be replaced by Zinc borate or Boron nitride, but not by Zinc oxide in order to maintain a good 960 GWT-performance at 1mm.

## Claims

1. A flame retardant polyester composition comprising, based on the total composition,
(a) from 55 to 97 weight percent of a polyester resin or polyester resin blend component;
(b) from 1 to 20 weight percent of a flame retarding quantity of at least one nitrogen-containing compound, selected from the group of triazine, guanidine, or (iso)cyanurate compounds;
(c) from 1 to 20 weight percent of a zinc- and/or boron-containing compound, selected from the group of zinc sulphide, zinc borate or boron nitride compounds, and/or combinations thereof;
(d) Non-fibrillating Poly(tetrafluoroethylene) in an amount of 0-2 weight percent.
(e) from 1 to 20 weight percent of a phosphorus-containing compound, wherein the total amount of nitrogen containing compound, zinc- and/or boron-containing compound, non-fibrillating PTFE, and phosphorous-containing compound comprises from 3 to 45 weight percent of the total composition.

2. The composition of claim 1, further comprising up to 40 weight percent of glass fiber.

3. The composition of claim 1, wherein the polyester resin is derived from an aliphatic or cycloaliphatic diol, or mixtures thereof, containing from 2 to 10 carbon atoms and at least one aromatic dicarboxylic acid.

4. The composition of claim 1, wherein the polyester has repeating units of the following general formula: 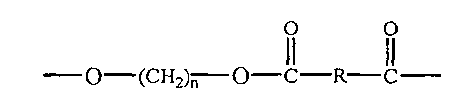 wherein n is an integer of from 2 to 6, and R is a C6-C20 aryl radical comprising a decarboxylated residue derived from an aromatic dicarboxylic acid.

5. The composition of claim 3, wherein the aromatic dicarboxylic acid is selected from the group consisting of terephthalic acid, isophthalic acid, naphthalene dicarboxylic acid or a mixture thereof, and the aliphatic polyol is selected from the group consisting of ethylene glycol, propylene glycol, buantediol, hydroquinone, resorcinol, trimethylene glycol, 2-methyl-1,3-propane glycol, hexamethylene glycol, decamethylene glycol, cyclohexane dimethanol, neopentylene glycol, and mixtures thereof.

6. The composition of claim 1, wherein the polyester resin is poly(ethylene terephthalate), poly(2,4-butylene terephthalate), poly(propylene terephthalate) or mixtures thereof.

7. The composition of claim 1, wherein the polyester resin blend comprises a blend of a polyester resin with an amorphous resin additive, an impact modifier, or a combination thereof.

8. The composition of claim 1, wherein the phosphorus-based compound is selected from the group consisting of red phosphorus, phosphoric acid, organic phosphates, organic phosphites, organic phosphinates, organic phosphonates, and salts of the foregoing.

9. The composition of claim 8, wherein the phosphorus-based compound is selected from the group consisting of resorcinol diphosphate; resorcinol bis(diphenyl phosphate) oligomer, cresyl diphenyl phosphate, bisphenol A diphosphate, the trimethylolpropanol ester of methyl phosphoric acid, and polypentaerytrhritol phosphonate.

10. The composition of claim 1, further comprising up to 60 weight percent of alumina, amorphous silica, anhydrous aluminum silicates, mica, feldspar, clays, talc, glass flake, glass fibers, glass microspheres, wollastonite, metal oxides such as titanium dioxide, zinc oxide, ground quartz, and mixtures thereof.

## Patentansprüche

1. Eine flammhemmende Polyesterzusammensetzung aufweisend bezogen auf die gesamte Zusammensetzung
(a) 55 bis 97 Gew.-% eines Polyesterharzes oder einer Polyesterharzblendkomponente;
(b) 1 bis 20 Gew.-% einer flammhemmenden Menge wenigstens einer Stickstoff enthaltenden Verbindung ausgewählt aus der Gruppe von Triazin, Guanidin oder (Iso)cyanuratverbindungen;
(c) 1 bis 20 Gew.-% einer Zink und/oder Bor enthaltenden Verbindung ausgewählt aus der Gruppe von Zinksulfid, Zinkborat oder Bornitridverbindungen, und/oder Kombinationen daraus;
(d) Nichtfibrillierendem Polytetrafluorethylen in einer Menge von 0 bis 2 Gew.-%.
(e) 1 bis 20 Gew.-% einer Phosphor enthaltenden Verbindung, wobei die Gesamtmenge an Stickstoff enthaltender Verbindung, Zink und/oder Bor enthaltender Verbindung, nichtfibrillierendem PTFE, und Phosphor enthaltender Verbindung 3 bis 45 Gew.-% der gesamten Zusammensetzung ausmacht.

2. Zusammensetzung nach Anspruch 1, weiterhin aufweisend bis zu 40 Gew.-% Glasfasern.

3. Zusammensetzung nach Anspruch 1, **dadurch gekennzeichnet, dass** das Polyesterharz sich von einem aliphatischen oder zykloaliphatischen Diol, oder Mischungen davon, enthaltend 2 bis 10 Kohlenstoffatome, und wenigstens einer aromatischen Dicarbonsäure ableitet.

4. Zusammensetzung nach Anspruch 1, **dadurch gekennzeichnet, dass** der Polyester Wiederholungseinheiten der folgenden allgemeinen Formel hat: 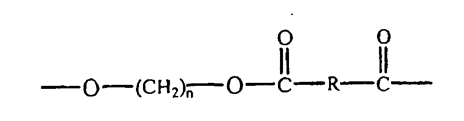 worin n eine ganze Zahl von 2 bis 6 ist, und R ein C6-C20 Arylrest ist, der einen decarboxylierten Rest umfasst, welcher sich von einer aromatischen Dicarbonsäure ableitet.

5. Zusammensetzung nach Anspruch 3, **dadurch gekennzeichnet, dass** die aromatische Dicarbonsäure ausgewählt ist aus der Gruppe bestehend aus Terephthalsäure, Isophthalsäure, Naphthalindicarbonsäure oder Mischungen daraus, und das aliphatische Polyol ausgewählt ist aus der Gruppe bestehend aus Ethylenglykol, Propylenglykol, Butandiol, Hydrochinon, Resorcin, Trimethylenglykol, 2-Methyl-1,3-propanglycol, Hexamethylenglycol, Decamethylenglycol, Cyclohexandimethanol, Neopentylglycol und Mischungen daraus.

6. Zusammensetzung nach Anspruch 1, **dadurch gekennzeichnet, dass** das Polyesterharz Polyethylenterephthalat, Poly-1,4-butylenterephthalat, Polypropylenterephthalat oder Mischungen daraus ist.

7. Zusammensetzung nach Anspruch 1, **dadurch gekennzeichnet, dass** der Polyesterharzblend ein Blend aus einem Polyesterharz mit einem amorphen Harzadditiv, einem Schlagzähmodifizierer oder Kombinationen daraus umfasst.

8. Zusammensetzung nach Anspruch 1, **dadurch gekennzeichnet, dass** die phosphorbasierende Verbindung ausgewählt ist aus der Gruppe bestehend aus rotem Phosphor, Phosphorsäure, organischen Phosphaten, organischen Phosphiten, organischen Phosphinaten, organischen Phosphonaten und Salzen der vorherstehenden.

9. Zusammensetzung nach Anspruch 8, **dadurch gekennzeichnet, dass** die phosphorbasierende Verbindung ausgewählt ist aus der Gruppe bestehend aus Resorcindiphosphat, Resorcinbisdiphenylphosphatoligomer, Kresyldiphenylphosphat, Bisphenol A-diphosphat, dem Trimethylolpropanolester der Methylphosphorsäure und Polypentaerythritolphosphonat.

10. Zusammensetzung nach Anspruch 1, weiterhin aufweisend bis zu 60 Gew.-% Aluminiumoxid, amorphes Silica, wasserfreie Aluminiumsilicate, Glimmer, Feldspat, Tone, Talk, Glasflocken, Glasfasern, Glasmikrokugeln, Wollastonit, Metalloxiden wie Titandioxid, Zinkoxid, gemahlener Quarz, und Mischungen daraus.

## Revendications

1. Composition ignifugée de polyester, comprenant, par rapport à la composition entière :
a) de 55 à 97 % en poids d'un composant qui est une résine polyester ou un mélange à base de résine polyester ;
b) de 1 à 20 % en poids, ou une quantité à effet ignifuge, d'au moins un composé azoté choisi dans l'ensemble formé par les composés de types triazine, guanidine, cyanurate et isocyanurate ;
c) de 1 à 20 % en poids d'un composé contenant du zinc et/ou du bore, choisi dans l'ensemble formé par les composés sulfure de zinc, borate de zinc et nitrure de bore et/ou leurs mélanges ;
d) de 0 à 2 % en poids d'un poly(tétrafluoroéthylène) ne formant pas de fibrilles ;
e) et de 1 à 20 % en poids d'un composé phosphoré,
le total des quantités du composé azoté, du composé contenant du zinc et/ou du bore, du PTFE ne formant pas de fibrilles et du composé phosphoré représentant de 3 à 45 % du poids total de la composition.

2. Composition conforme à la revendication 1, comprenant en outre jusqu'à 40 % en poids de fibres de verre.

3. Composition conforme à la revendication 1, dans laquelle la résine polyester dérive d'un diol aliphatique ou cycloaliphatique dont la molécule comporte de 2 à 10 atomes de carbone, ou d'un mélange de tels diols, et d'au moins un acide dicarboxylique aromatique.

4. Composition conforme à la revendication 1, dans laquelle le polyester comporte des motifs répétitifs de formule générale suivante : 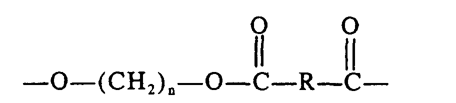 dans laquelle n représente un nombre entier qui vaut de 2 à 6 et R représente un groupe arylène en C₆₋₂₀ qui est le reste décarboxylé d'un acide dicarboxylique aromatique.

5. Composition conforme à la revendication 3, dans laquelle l'acide dicarboxylique aromatique est choisi dans l'ensemble constitué par l'acide téréphtalique, l'acide isophtalique et l'acide naphtalène-dicarboxylique, ainsi que leurs mélanges, et le diol aliphatique est choisi dans l'ensemble constitué par l'éthylèneglycol, le propylèneglycol, le butanediol, l'hydroquinone, le résorcinol, le triméthylèneglycol, le 2-méthyl-propane-1,3-diol, l'hexaméthylèneglycol, le décaméthylèneglycol, le cyclohexane-diméthanol et le néopentylèneglycol, ainsi que leurs mélanges.

6. Composition conforme à la revendication 1, dans laquelle la résine polyester est un poly(éthylène téréphtalate), un poly(1,4-butylène téréphtalate), un poly(propylène téréphtalate), ou un mélange de tels polyesters.

7. Composition conforme à la revendication 1, dans laquelle le mélange à base de résine polyester est un mélange d'une résine polyester et d'un adjuvant résineux amorphe, d'un agent modifiant la résistance au choc ou d'une combinaison de ceux-ci.

8. Composition conforme à la revendication 1, dans laquelle le composé phosphoré est choisi dans l'ensemble formé par le phosphore rouge, l'acide phosphorique, les phosphates organiques, les phosphites organiques, les phosphinates organiques, les phosphonates organiques et les sels de ces composés.

9. Composition conforme à la revendication 8, dans laquelle le composé phosphoré est choisi dans l'ensemble formé par le diphosphate de résorcinol, un oligomère de bis(diphényl-phosphate) de résorcinol, le phosphate de crésyle et de diphényle, le diphosphate de bisphénol A, un ester de tris(hydroxyméthyl)propanol et d'acide méthyl-phosphorique, et un phosphonate de polypentaérythritol.

10. Composition conforme à la revendication 1, qui comprend en outre jusqu'à 60 % en poids d'alumine, de silice amorphe, d'un aluminosilicate anhydre, de mica, de feldspath, d'une argile, de talc, de paillettes de verre, de fibres de verre, de microsphères de verre, de wollastonite, d'un oxyde de métal comme du dioxyde de titane ou de l'oxyde de zinc, ou de quartz broyé, ou d'un mélange de ces corps.
